# EUROPÄISCHE PATENTSCHRIFT

(11) **EP 0 935 914 B1**
(45) Veröffentlichungstag und Bekanntmachung des Hinweises auf die Patenterteilung: **15.05.2002**
(21) Anmeldenummer: 99102670.9
(22) Anmeldetag: 12.02.1999
(51) Int. Cl.: A01C 7/04

(54) **Einzelkornsämaschine**
Single-seed drill
Semoir monograine

(30) Priorität: 17.02.1998 DE 29802612 U
(43) Veröffentlichungstag der Anmeldung: 18.08.1999
(73) Patentinhaber: Kverneland Accord GmbH & Co. KG, 59494 Soest (DE)
(72) Erfinder: Weiste, Helmut, 59494 Soest (DE); Schneiders, Walter, 52355 Düren-Kufferath (DE)
(74) Vertreter: Habbel, Hans-Georg, Dipl.-Ing.

(56) Entgegenhaltungen:
- EP-A- 0 156 637
- FR-A- 2 221 902
- US-A- 5 058 766
- US-A- 5 401 035

## Beschreibung

Die Erfindung betrifft eine Einzelkornsämaschine gemäß dem Oberbegriff des Hauptanspruches.

Einzelkornsämaschinen mit Säscheiben sind bereits aus der Literatur und der Praxis bekannt und diese Einzelkornsämaschinen weisen rotierend angeordnete Säscheiben auf, die zu ihrem Außenumfang offene Samenzellen aufweisen, die die zu vereinzelnen Saatkörner aufnehmen, die der Säscheibe durch eine Saatgutzuführung zugeliefert wurden. Diese vereinzelten Saatkömer, die sich in den einzelnen Samenzellen befinden, werden schließlich von der Säscheibe in einem Abgabebereich wieder abgegeben und fallen in die Saatfurche.

Die Säscheiben sind beinahe ganz von Wandungen umschlossen, wobei diese Wandungen einerseits von einem Gehäuse und andererseits von einem daran abnehmbar angeordneten Deckel gebildet werden. Dabei befindet sich an dem Gehäuse eine hervorstehende Laufbahn, die im wesentlichen kreisförmig die sich drehende Säscheibe in geringem Abstand umgibt und auf der die Saatkörner, die sich innerhalb der Samenzellen befinden, geführt werden. Im Abgabebereich der Sämaschine ist dann diese Laufbahn unterbrochen und aufgrund der Zentrifugalkraft und/oder der Schwerkraft werden die Saatkörner abgegeben.

Durch die Führung der Saatkörner sowohl durch die Laufbahn des Gehäuses als auch durch die Laufbahnen am Seiteninnendeckel müssen bei der Montage der Sämaschine beide Bauteile, Gehäuse und Deckel, exakt zueinander passen, um eine einwandfreie Funktion der Einzelkomsämaschine zu ermöglichen, d. h. einerseits muß die Fertigung beider Bauteile exakt sein und darüber hinaus muß die Montage exakt sein.

Darüber hinaus hat sich herausgestellt, daß bei häufigem Gebrauch der Einzelkornsämaschine ein Verschleiß der Laufbahn an dem Gehäuse vorkommen kann und schließlich, zum Ersatz der Laufbahn, das gesamte Gehäuse gewechselt werden muß, was kostenaufwendig ist.

Der Erfindung liegt die Aufgabe zugrunde, eine Einzelkornsämaschine zu schaffen, die zum einen kostengünstig gefertigt werden kann und die darüber hinaus eine kostengünstige Wartung bei großer Flächenleistung ermöglicht.

Diese der Erfindung zugrundeliegende Aufgabe wird durch die Lehre des kennzeichnenden Teiles des Hauptanspruches gelöst.

Mit anderen Worten ausgedrückt wird eine Sämaschine mit einer Säscheibe vorgeschlagen, bei der im Bereich der Säscheibe die Saatkörner im wesentlichen durch Laufbahnen geführt werden, die an einem leicht austauschbaren Abdeckelement der Sämaschine angeordnet sind.

Vorteilhafte Ausgestaltungen der Erfindung sind in den Unteransprüchen erläutert.

Ein Ausführungsbeispiel der Erfindung wird nachfolgend in den Zeichnungen beschrieben, wobei
- Fig. 1: in einer auseinandergezogenen Darstellung eine Sämaschine mitsamt Säscheibe und Abdeckung darstellt,
- Fig. 2: zeigt in einer Schnittdarstellung die von ihren umgebenen Wandungen abgedeckte Säscheibe,
- Fig. 3: zeigt einen vergrößerten Ausschnitt aus Fig. 2,

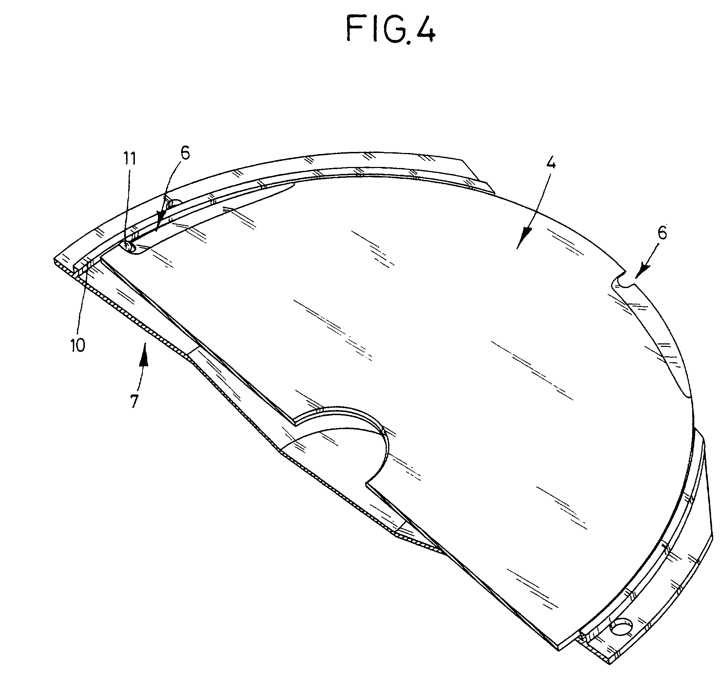

- Fig. 4: zeigt eine aus Übersichtlichkeitsgründen nur halb dargestellte Säscheibe mit daran befindlichem (halbem) Deckel und

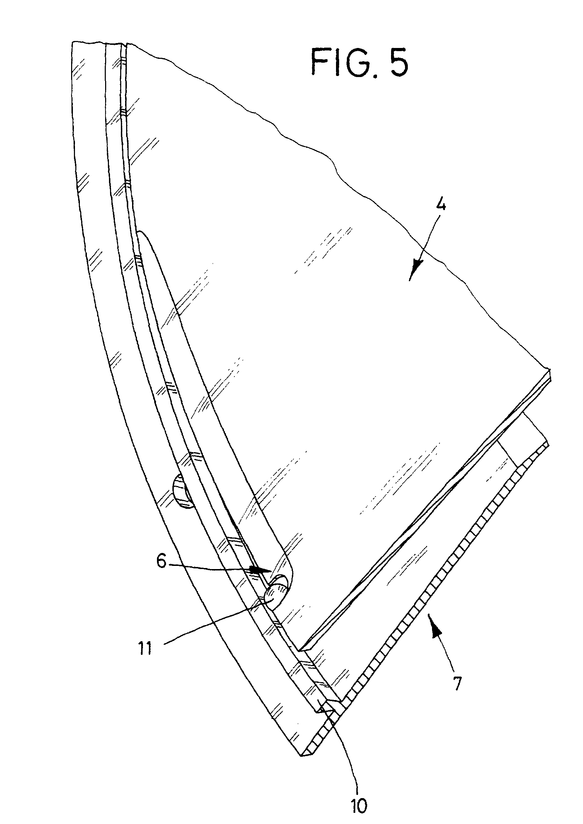

- Fig. 5: zeigt einen Ausschnitt aus Fig. 4.

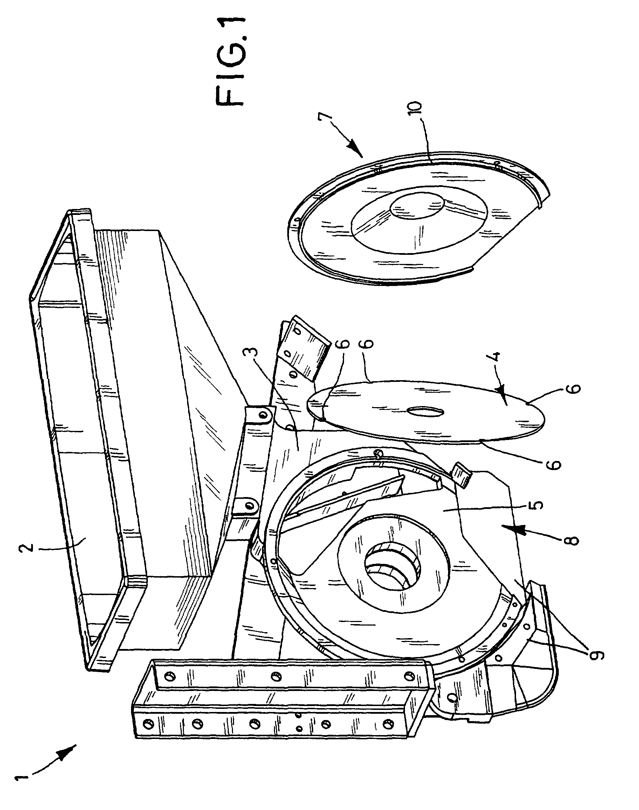

Bezugnehmend auf Fig. 1 ist eine Einzelkornsämaschine 1 dargestellt, die einen Saatkombehälter 2 aufweist, dessen Zuführungskanal 3 in den Bereich einer Säscheibe 4 mündet, die drehbar an einem Gehäuse 5 angeordnet ist. Die Säscheibe 4 weist Samenzellen 6 auf, die zum Außenumfang der Säscheibe 4 hin offen ausgebildet sind und zur Aufnahme eines Samenkornes dienen. In montiertem Zustand der Säscheibe 4 wird diese also nach innen durch die Wandungen des Gehäuses 5 "abgedichtet" und nach außen hin durch einen Deckel 7, der abnehmbar an dem Gehäuse 5 angeordnet ist.

In einem Abgabebereich 8 schließlich ist ein Schar 9 ausgebildet, das den Boden auf die jeweilige Ablagetiefe hin öffnet, so daß das im Abgabebereich 8 abgegebene Saatkorn auf die entsprechende Saattiefe abgelegt werden kann.

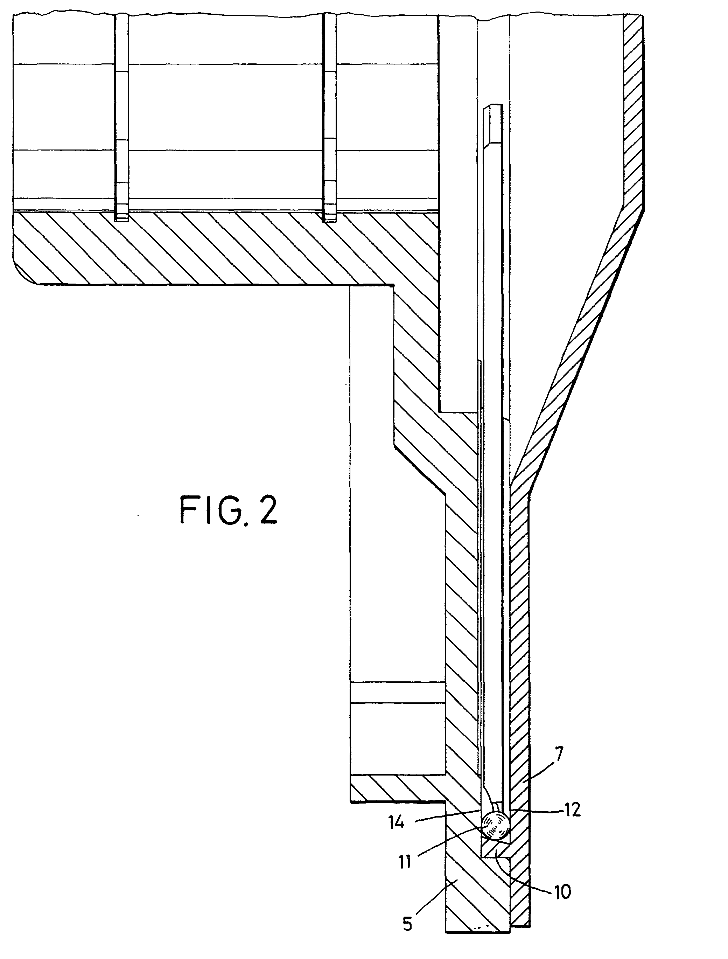

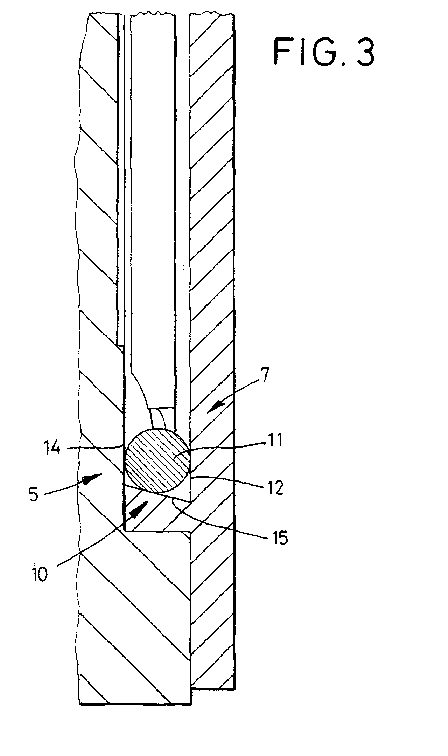

Wie aus Fig. 2 und 3 ersichtlich ist, weist der Deckel 7 einen zum Gehäuse 5 gerichteten Laufbahnsteg 10 auf, der in seiner Höhe in etwa dem Abstand zwischen der Deckelinnenseite und der Seitenlaufbahn 14 entspricht. Dieser Laufbahnsteg 10 ist - wie aus Fig. 1 ersichtlich ist - in etwa kreisrund ausgebildet, wobei die kreisrunde Form im Abgabebereich 8 unterbrochen ist und dort die Abgabe der mitgeführten Saatkörner ermöglicht.

Neben dem Laufbahnsteg 10 wird das Saatgut 11 zudem durch Seitenlaufbahnen 12 und 14 geführt, wobei die Seitenlaufbahn 12 an der Innenseite des Deckels 7 angeordnet ist und die Seitenlaufbahn 14 am Gehäuse 5. Wesentliche Führungsarbeit des Saatgutes übernimmt jedoch der Laufbahnsteg 10, der an dem Deckel aufgebracht ist, da aufgrund der Zentrifugalkräfte auf diesen Laufbahnsteg 10 die größten Kräfte des mitgeführten Saatgutes 11 wirken.

Der Laufbahnsteg 10 kann einteilig mit dem Deckel 7 ausgeführt sein, wobei es vorteilhaft ist, den Deckel dann aus verschleißfestem Kunststoff herzustellen. Darüber hinaus ist es möglich, den Laufbahnsteg 10 z. B. durch Verschweißen, Verkleben, Verschrauben od. dgl. auf dem Deckel 7 zu befestigen, wobei bei dieser Ausführungsform bei Verschleiß des Laufbahnsteges 10 ein einzelnes Auswechseln dieses Laufbahnsteges 10 am Deckel 7 möglich ist.

Anderenfalls ist es lediglich notwendig, bei verschlissenem Laufbahnsteg 10 den Deckel 7 auszuwechseln, was wesentlich kostengünstiger ist als eine Auswechselung des gesamten Gehäuses 5 vorzunehmen, wie es bei Einzelkornsämaschinen 1 gemäß dem Stand der Technik notwendig ist.

Die Oberfläche des Laufbahnsteges 10 kann leicht zur Innenseite des Deckels 7 geneigt sein, wie es besonders deutlich in Fig. 3 ersichtlich ist, um zu erreichen, daß das geführte Saatgut 11 mehr an die Innenseite des Deckels 7 gedrückt wird als an das Gehäuse 5, um auch hier die Laufbahnführung an dem Gehäuse 5 zu entlasten und die Belastung der seitlichen Führungsarbeit möglichst dem Deckel 7 zu überlassen, um auch hier wiederum bei einem entsprechenden Verschleiß die seitliche Laufbahn 12 möglichst einfach z. B. durch Auswechseln des Deckels 7 zu ermöglichen. Dieser Winkel zwischen der Laufbahn des Laufbahnsteges 10 und der Seitenlaufbahn 12 wird im wesentlichen bestimmt durch die Geschwindigkeit, mit der das Saatgut 11 transportiert wird, er ist jedoch auch je nach Saatgut etc. wählbar.

Neben der einfacheren Wartung/Auswechselung der verschlissenen Laufbahnen hat die vorgeschlagene Neuerung den Vorteil, daß eine wesentlich einfachere Herstellung der Führungen des Saatgutes ermöglicht wird, da die Hauptführungsarbeit nunmehr durch die Laufbahnen an dem Deckel 7 durchgeführt werden und somit nur dieses eine Bauteil Deckel 7 sehr präzise ausgebildet werden muß und die Passung des Deckels 7 an dem Gehäuse 5 weniger wichtig ist als bei den Ausführungsformen gemäß dem Stand der Technik.

## Patentansprüche

1. Einzelkornsämaschine mit einer drehbar ausgebildeten Säscheibe, die zu ihrem Außenumfang hin offene Samenzellen zur Aufnahme von Saatkörnern aufweist, wobei die Säscheibe zumindest im Bereich ihres Außenumfanges von mindestens einer Gehäusewandung und von einem daran angeordneten, abnehmbaren Deckel umschlossen ausgebildet ist, wobei diese umschließenden Wandungen einen Mündungsbereich der Saatgutzuführung und einen Abgabebereich für die vereinzelt abzulegenden Saatkörner aufweisen, **gekennzeichnet durch** einen an der zur Säscheibe (4) weisenden Innenseite des Deckels (7) angeordneten Laufbahnsteg (10), der die Samenzellen (6) der Säscheibe (4) an dem Außenumfang der Säscheibe (4) abdichtend ausgebildet ist.

2. Einzelkornsämaschine gemäß Anspruch 1, **gekennzeichnet durch** die Höhe des Laufbahnsteges (10), die im wesentlichen dem Abstand der Innenseite des Deckels (7) zur Laufbahn (14) des Gehäuses (5) entspricht.

3. Einzelkornsämaschine gemäß Anspruch 1 oder 2, **gekennzeichnet durch** die Oberfläche des Laufbahnsteges (10), die gegenüber der Innenseite des Deckels einen geringeren Winkel als 90° aufweist.

4. Einzelkornsämaschine gemäß einem der vorhergehenden Ansprüche, **gekennzeichnet durch** den aus einem verschleißarmen Kunststoff bestehenden Deckel (7).

5. Einzelkornsämaschine gemäß einem der vorhergehenden Ansprüche, **gekennzeichnet durch** den Laufbahnsteg (10), der aus einem anderen Material hergestellt ist als eine Seitenlaufbahn (12) des Deckels (7).

6. Einzelkornsämaschine gemäß einem der vorhergehenden Ansprüche, **gekennzeichnet durch** den Laufbahnsteg (10), der als teilkreisförmiges Segment ausgebildet ist.

## Claims

1. Single grain sowing machine comprising a sowing disc of rotary design with seed cells which are open towards its outer circumference for accommodating seed grains, and the sowing disc is at least in the area of its outer circumference encased by at least one housing wall and by a thereto releasably attached cover, and these encasing walls comprise a mouth area of the seed feed and a dispensing area for seed grains which are to be individually deposited, **characterised by** a path web (10) arranged on the inside of the cover (7) oriented towards the sowing disc (4) designed so as to seal the seed cells (6) of the sowing disc (4) at the outer circumference of the sowing disc (4).

2. Single grain sowing machine according to Claim 1, **characterised by** the height of the path web (10) which corresponds substantially with the gap between the inside of the cover (7) and the path (14) of the housing (5).

3. Single grain sowing machine according to Claim 1 or 2, **characterised by** the surface of the path web (10) which has an angle of less than 90° relative to the inside of the cover.

4. Single grain sowing machine according to one of the above claims, **characterised by** the cover (7) which is made of a wear resistant plastic material.

5. Single grain sowing machine according to one of the above claims, **characterised by** the path web (10) which is made of a different material than a lateral path (12) of the cover (7).

6. Single grain sowing machine according to one of the above claims, **characterised by** the path web (10) which is designed as a sectionally circular segment.

## Revendications

1. Semoir monograine avec un disque de semoir rotatif présentant sur sa circonférence extérieure des cases à graines destinées à recevoir des graines de semences, lequel disque de semoir est renfermé, au moins au niveau de sa circonférence extérieure, par au moins une paroi de boîtier et un couvercle amovible disposé sur celle-ci, ces parois d'entourage présentant une zone de débouché de l'arrivée de semences et une zone de dépose pour les graines de semences à déposer une par une, **caractérisé en ce qu'**il comporte un bandeau de glissière (10) disposé sur la face intérieure du couvercle (7) orientée vers le disque de semoir (4), qui est conçu de façon à fermer le disque de semoir (4) sur la circonférence extérieure de celui-ci.

2. Semoir monograine selon la revendication 1, **caractérisé en ce que** la hauteur du bandeau de glissière (10) correspond sensiblement à la distance entre la face intérieure du couvercle (7) et la glissière (14) du boîtier (5).

3. Semoir monograine selon la revendication 1 ou 2, **caractérisé en ce que** la surface du bandeau de glissière (10) forme un angle inférieur à 90° avec la face intérieure du couvercle.

4. Semoir monograine selon l'une ou l'ensemble des revendications précédentes, **caractérisé en ce que** le couvercle (7) se compose d'un plastique résistant à l'usure.

5. Semoir monograine selon l'une ou l'ensemble des revendications, **caractérisé en ce que** le bandeau de glissière (10) est fabriqué en un autre matériau qu'une glissière latérale (12) du couvercle (7).

6. Semoir monograine selon l'une ou l'ensemble des revendications précédentes, **caractérisé en ce que** le bandeau de glissière (10) est conformé comme un segment en arc de cercle.
